# EUROPEAN PATENT APPLICATION

(11) **EP 4 502 617 A1**
(43) Date of publication of application: **05.02.2025**
(21) Application number: 23778848.4
(22) Date of filing: 03.02.2023
(51) Int. Cl.: G01N 35/02

(54) **AUTOMATED ANALYSIS DEVICE, AND LIQUID SURFACE DETECTION METHOD**

(30) Priority: 29.03.2022 JP 2022053412
(71) Applicant: HITACHI HIGH-TECH CORPORATION, Tokyo 105-6409 (JP)
(72) Inventor: OCHI Manabu, Tokyo 100-8280 (JP); KAWAHARA Tetsuji, Tokyo 105-6409 (JP); SUZUKI Yoichiro, Tokyo 105-6409 (JP); TAKAYAMA Hiroyuki, Tokyo 105-6409 (JP); MUKAIYAMA Naoki, Tokyo 105-6409 (JP); FUNATSU Terunobu, Tokyo 100-8280 (JP); YOSHIKAWA Keiko, Tokyo 105-6409 (JP); TAMEZANE Hideto, Tokyo 105-6409 (JP)
(74) Representative: MERH-IP Matias Erny Reichl Hoffmann Patentanwälte PartG mbB
(86) International application number: PCT/JP2023/003524
(87) International publication number: WO 2023/188812

(57) **Abstract**

The present invention provides an automated analysis device and a liquid surface detection method capable of detecting a liquid surface position of a sample regardless of saturation or permeability of the sample. An automated analysis device according to the present invention includes: a rack conveyance path (141) that transfers a sample tube rack (2) storing a sample tube (3) containing a sample (4); a camera (5) provided on a side of the rack conveyance path (141); and a control unit (10) that controls the rack conveyance path (141) and the camera (5). The control unit (10) is configured to: stop transfer of the sample tube rack (2) to which the rack conveyance path (141) is transferred; acquire a plurality of captured images of the sample tube (3) by capturing an image sample tube (3) stored in the sample tube rack (2) in which transfer is stopped a plurality of times with the camera (5); create a difference image of a plurality of the captured images; and set a region having a largest area among regions having a temporal change in the difference image as a position of a liquid surface (41) of the sample (4).

## Description

### Technical Field

The present invention relates to an automated analysis device for analyzing a sample and a liquid surface detection method for detecting a liquid surface of the sample.

### Background Art

The automated analysis device analyzes a sample by reacting the sample such as blood or urine with a reagent and measuring absorbance or luminescence intensity of a reaction mixture. In the automated analysis device, it is desired to determine the shortage of the sample amount at an early stage in order to reduce the consumption of consumables and reagents by eliminating unnecessary inspection and improve the reliability of the inspection result. Therefore, a method of detecting a liquid surface position of a sample by image processing and estimating a sample amount based on the detected liquid surface position has been proposed.

For example, PTL 1 describes an example of a sample analysis device that detects the position of a sample contained in a sample tube. The sample analysis device described in PTL 1 captures an image of a sample tube lifted from a sample rack by using a grip portion with a camera, and detects a position of a pixel in which an accumulated value of red and blue luminances along a height direction of the sample tube in the captured image or a ratio of the accumulated values changes to a threshold or more as a position of a liquid surface.

### Citation List

### Patent Literature

PTL 1: JP 2010-038659 A

### Summary of Invention

### Technical Problem

In the technique described in PTL 1, since the liquid surface position of the sample is detected using the color information of the sample in the captured image captured by the camera, there is a possibility that the liquid surface position of the sample cannot be detected in a case where the saturation of the sample is low and permeability is high. In addition, in order to capture an image of the sample tube (hereinafter, referred to as a "sample tube") with a camera, a mechanism for taking out the sample tube from the sample tube rack (hereinafter, referred to as a "sample tube rack") is required.

An object of the present invention is to provide an automated analysis device and a liquid surface detection method capable of detecting a liquid surface position of a sample regardless of saturation or permeability of a sample.

### Solution to Problem

An automated analysis device according to the present invention includes: a rack conveyance path that transfers a sample tube rack storing a sample tube containing a sample; a camera provided on a side of the rack conveyance path; and a control unit that controls the rack conveyance path and the camera. The control unit is configured to: stop transfer of the sample tube rack to which the rack conveyance path is transferred; acquire a plurality of captured images of the sample tube by capturing an image sample tube stored in the sample tube rack in which transfer is stopped a plurality of times with the camera; create a difference image of a plurality of the captured images; and set a region having a largest area among regions having a temporal change in the difference image as a position of a liquid surface of the sample.

A liquid surface detection method according to the present invention further includes: a step of transferring a sample tube rack storing a sample tube containing a sample by a rack conveyance path; a step of stopping transfer of the sample tube rack to which the rack conveyance path is transferred; a step of acquiring a plurality of captured images of the sample tube by capturing an image of the sample tube stored in the sample tube rack in which the transfer is stopped a plurality of times with a camera; a step of creating a difference image of a plurality of the captured images; and a step of setting a region having a largest area among regions having a temporal change in the difference image as a position of a liquid surface of the sample.

### Advantageous Effects of Invention

According to the present invention, it is possible to provide an automated analysis device and a liquid surface detection method capable of detecting a liquid surface position of a sample regardless of saturation or permeability of a sample.

### Brief Description of Drawings

[FIG. 1] FIG. 1 is a top view illustrating an outline of a configuration of an automated analysis device according to a first embodiment of the present invention.
[FIG. 2A] FIG. 2A is a diagram for describing a pitch of a sample tube rack with multi-channel.
[FIG. 2B] FIG. 2B is a diagram for describing a pitch of a sample tube rack with single-channel.
[FIG. 3] FIG. 3 is a diagram in which schematic diagrams illustrating examples of captured images obtained by capturing an image of a sample tube by a camera at each time interval Δt are arranged in (a) to (i) in order of image capturing time.
[FIG. 4] FIG. 4 is a diagram illustrating an example of a temporal change in the transfer speed V of the sample tube rack.
[FIG. 5A] FIG. 5A is a schematic diagram illustrating an example of an inter-image difference image created using three captured images of a captured image (a) to a captured image (c) in FIG. 3.
[FIG. 5B] FIG. 5B is a schematic diagram illustrating an example of an inter-image difference image created using three captured images of a captured image (d) to a captured image (f) in FIG. 3.
[FIG. 5C] FIG. 5C is a schematic diagram illustrating an example of an inter-image difference image created using three captured images of a captured image (g) to a captured image (i) in FIG. 3.
[FIG. 6] FIG. 6 is a top view illustrating an outline of a configuration of a sample supply unit included in an automated analysis device according to a second embodiment of the present invention.

### Description of Embodiments

In the automated analysis device and the liquid surface detection method according to the present invention, the transfer of the sample tube rack storing the sample tube is stopped, the sample tube is imaged a plurality of times while the liquid surface of the sample continues to swing while the transfer of the sample tube rack is stopped, and the position of the liquid surface of the sample is detected based on a region having a temporal change among the plurality of obtained captured images. For this reason, in the automated analysis device and the liquid surface detection method according to the present invention, the liquid surface position of the sample can be detected regardless of the saturation and permeability of the sample, and the liquid surface position can be detected more reliably and accurately than before. Furthermore, in the automated analysis device and the liquid surface detection method according to the present invention, since the sample tube can be imaged without being taken out from the sample tube rack, a mechanism for taking out the sample tube for image capturing is unnecessary, the time required to detect the liquid surface position of the sample can be shortened, and a decrease in the throughput of the automated analysis device can be prevented.

Hereinafter, an automated analysis device and a liquid surface detection method according to an embodiment of the present invention will be described with reference to the drawings. The liquid surface detection method according to the present invention can be applied not only to an automated analysis device but also to any device that detects a liquid surface of a liquid. In the drawings referred to in the present specification, the same or corresponding components are denoted by the same reference numerals, and repeated description of these components may be omitted.

### First Embodiment

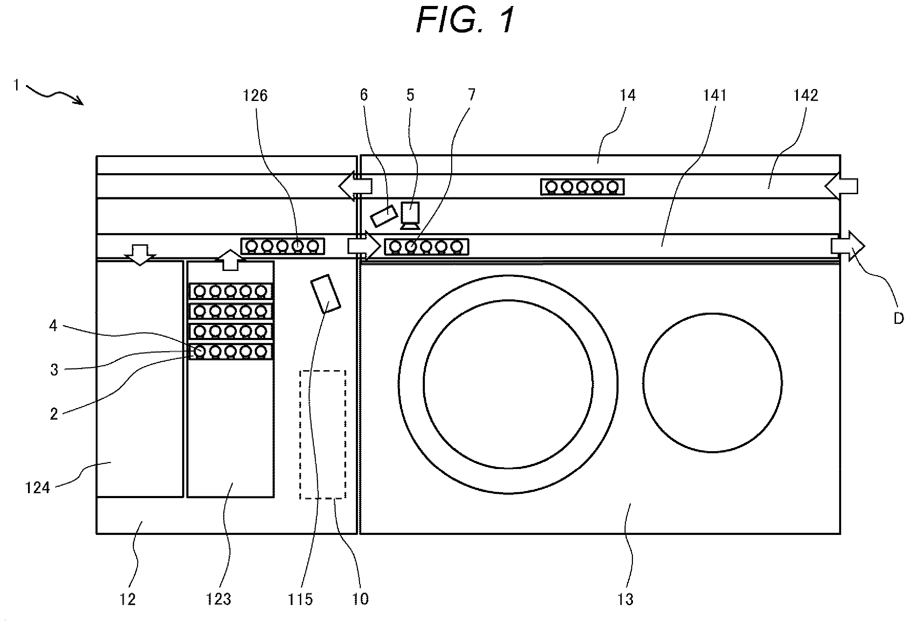

FIG. 1 is a top view illustrating an outline of a configuration of an automated analysis device 1 according to a first embodiment of the present invention. The automated analysis device 1 includes a sample supply unit 12 including a carry-in port 123 and a carry-out port 124 of a sample tube rack 2, an analysis module 13 that dispenses a certain amount of a sample 4 and performs measurement, a conveyance unit 14 that transfers the sample 4, and a control unit 10 that controls the automated analysis device 1. The control unit 10 is installed inside the sample supply unit 12 in FIG. 1, but can be installed at an arbitrary position of the automated analysis device 1. In addition, the control unit 10 may be installed outside the automated analysis device 1 and control the automated analysis device 1 by communicating with the automated analysis device 1.

The sample 4 is, for example, a liquid such as blood or urine, and is put in the sample tube 3. In the automated analysis device 1, in order to protect the sample 4 and improve workability, the sample tube 3 containing the sample 4 is transferred in a state of being stored in the sample tube rack 2.

The sample tube rack 2 stores the sample tube 3 containing the sample 4. The sample tube rack 2 may be a sample tube rack with multi-channel that can store a plurality of sample tubes 3, or may be a sample tube rack with single-channel that stores one sample tube 3. In FIG. 1, an arrow D indicates a transfer direction of the sample tube rack 2.

The sample supply unit 12 includes a barcode reader 115. The sample tube 3 includes a barcode label for sample identification. In the present embodiment, it is assumed that a barcode label is attached to the sample tube 3. The barcode reader 115 can read the barcode label of the sample tube 3 at a barcode reading position 126. The control unit 10 identifies the sample 4 put in the sample tube 3 based on the information obtained from the barcode label read by the barcode reader 115, and allocates the analysis module 13 as a transfer destination to the sample tube rack 2 according to the identified sample 4.

The conveyance unit 14 includes a rack conveyance path 141 for loading and a rack conveyance path 142 for unloading. The rack conveyance path 141 for loading transfers the sample tube rack 2 from the sample supply unit 12 to the analysis module 13. The rack conveyance path 142 for unloading transfers the sample tube rack 2 from the analysis module 13 to the sample supply unit 12. The rack conveyance path 141 for loading and the rack conveyance path 142 for unloading can be formed of, for example, a belt or the like.

The analysis module 13 includes a camera 5 and an illumination 6 on the side of the rack conveyance path 141 for loading. The camera 5 focuses on the rack conveyance path 141, and captures an image of the sample tube 3 and the sample 4 accommodated in the sample tube 3. The illumination 6 is installed on the same side as the camera 5 with respect to the rack conveyance path 141, illuminates the rack conveyance path 141, and irradiates the sample tube 3 with light. The illumination 6 may irradiate the sample tube 3 with light only when the camera 5 captures an image of the sample tube 3.

The control unit 10 controls the sample supply unit 12, the analysis module 13, the conveyance unit 14, the barcode reader 115, the camera 5, and the illumination 6. For example, the control unit 10 controls the conveyance unit 14 to transport the sample tube rack 2, controls the camera 5 to capture an image of the sample tube 3, and controls the illumination 6 to irradiate the sample tube 3 with light.

The control unit 10 transfers the sample tube rack 2 in units of pitches to be described later, and stops the transfer of the sample tube rack 2 at a position where one position of the sample tube 3 stored in the sample tube rack 2 coincides with the focus position 7 of the camera 5. The camera 5 is controlled by the control unit 10, and captures an image of the sample tube 3 at the focus position 7 of the camera 5 a plurality of times while the transfer of the sample tube rack 2 is stopped. When the image capturing of the sample tube 3 is completed, the control unit 10 transfers the sample tube rack 2 in units of pitch, and stops the transfer of the sample tube rack 2 at a position where the position of the next sample tube 3 (the sample tube 3 adjacent to the imaged sample tube 3) coincides with the focus position 7 of the camera 5. The camera 5 captures an image of the sample tube 3 at the focus position 7 of the camera 5 a plurality of times while the transfer of the sample tube rack 2 is stopped.

The control unit 10 repeats the above processing to capture an image of each of the sample tubes 3 by the camera 5 a plurality of times while the transfer of the sample tube rack 2 is stopped, and acquires a plurality of captured images of the sample tube 3 stored in the sample tube rack 2 where the transfer is stopped.

The automated analysis device 1 can include a display device (not illustrated). In addition, the automated analysis device 1 can be connected to a display device.

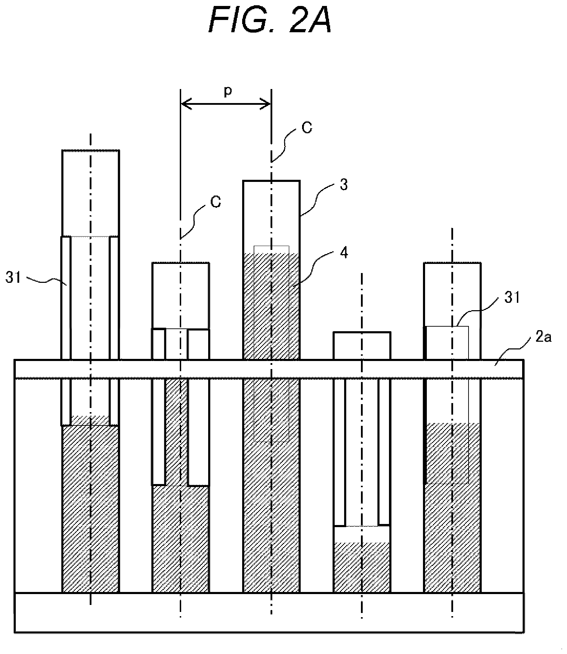

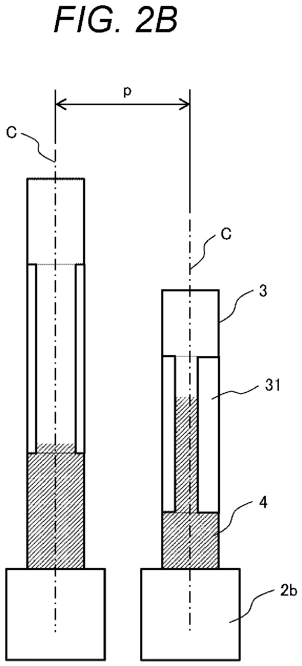

The pitch in the above description will be described with reference to FIGS. 2A and 2B.

FIG. 2A is a diagram for describing a pitch p of a sample tube rack with multi-channel 2a. FIG. 2B is a diagram for describing a pitch p of a sample tube rack with single-channel 2b. FIG. 2A illustrates, as an example, the sample tube rack with multi-channel 2a that can store five sample tubes 3.

As shown in FIGS. 2A and 2B, the central axis of the sample tube 3 is represented by a symbol C. The sample tube 3 contains the sample 4, and a barcode label 31 for sample identification is attached to the sample tube 3. The barcode label 31 is attached to a part of the sample tube 3 in the circumferential direction. From the gap of the barcode label 31, the camera 5 can capture an image of the sample 4 contained in the sample tube 3.

The pitch p is a distance between the central axes C of the sample tubes 3 stored in the sample tube rack 2(2a, 2b) and adjacent to each other. In the sample tube rack with multi-channel 2a, as illustrated in FIG. 2A, the pitch p is a distance between the central axis C of one sample tube 3 and the central axis C of the sample tube 3 adjacent to the sample tube 3 in one sample tube rack 2a. In the sample tube rack with single-channel 2b, as illustrated in FIG. 2B, the pitch p is a distance between the central axis C of the sample tube 3 stored in the sample tube rack 2b and the central axis C of the sample tube 3 stored in the sample tube rack 2b adjacent to the sample tube rack 2b.

For example, in the sample tube rack with multi-channel 2a illustrated in FIG. 2A, the control unit 10 stops the transfer of the sample tube rack 2a at a position where the position of the central axis C of one sample tube 3 coincides with the focus position 7 of the camera 5, causes the camera 5 to capture a plurality of images of the sample tube 3 while the transfer of the sample tube rack 2a is stopped, and transfers the sample tube rack 2a by the pitch p when the image capturing of the sample tube 3 is completed. The control unit 10 repeats the above processing for the five sample tubes 3.

In addition, for example, in the sample tube rack with single-channel 2b illustrated in FIG. 2B, the control unit 10 stops the transfer of the sample tube rack 2b at a position where the position of the central axis C of the sample tube 3 stored in the sample tube rack 2b coincides with the focus position 7 of the camera 5, and causes the camera 5 to image the sample tube 3 a plurality of times while the transfer of the sample tube rack 2b is stopped. When the image capturing of the sample tube 3 is completed, the control unit 10 transfers the sample tube rack 2b storing the sample tube 3 and the sample tube rack 2b adjacent to the sample tube rack 2b by the pitch p. The control unit 10 repeats the above processing for the plurality of sample tube racks 2b.

The time interval at which the camera 5 captures an image of the sample tube 3 while the transfer of the sample tube rack 2 is stopped and the time width for image capturing can be determined based on, for example, the acceleration and speed of the transfer of the sample tube rack 2, the magnitude of vibration of the sample tube 3 after the stop of the sample tube rack 2, and the like. The number of times that the camera 5 captures an image of the sample tube 3 while the transfer of the sample tube rack 2 is stopped can be determined based on a time interval, a time width, and the like of image capturing, and is preferably at least three times, for example.

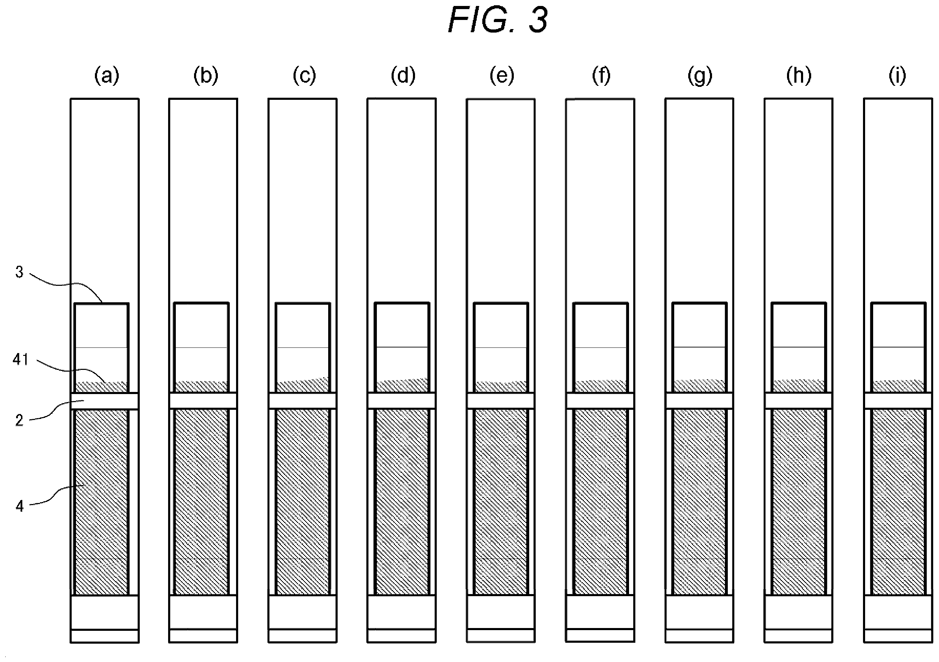

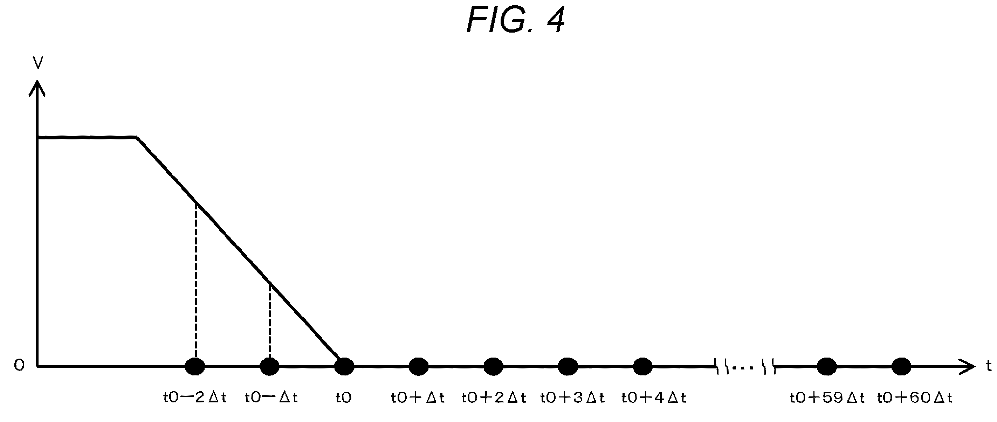

The principle of the liquid surface detection method according to the embodiment of the present invention will be described with reference to FIGS. 3 and 4. The automated analysis device according to the embodiment of the present invention detects the liquid surface of the sample 4 using this liquid surface detection method.

FIG. 3 is a diagram in which schematic diagrams illustrating examples of captured images obtained by capturing an image of the sample tube 3 by the camera 5 at each time interval Δt are arranged in (a) to (i) in order of image capturing time. The schematic diagram of the captured image illustrated in FIG. 3 illustrates the sample tube rack 2, the sample tube 3 stored in the sample tube rack 2, the sample 4 stored in the sample tube 3, and a liquid surface 41 of the sample 4.

The captured image (c) is a captured image of the sample tube 3 at a time t0 when the sample tube rack 2 being transferred is stopped. The captured image (a) is a captured image of the sample tube 3 at a time (t0-2Δt) that is 2Δt before the time t0. The captured image (d) is a captured image of the sample tube 3 at a time (t0+Δt) that is Δt after the time t0, and the captured image (g) is a captured image of the sample tube 3 at a time (t0+4Δt) that is 4Δt after the time t0.

FIG. 4 is a diagram illustrating an example of a temporal change in the transfer speed V of the sample tube rack 2. The capturing time of the captured image of the sample tube 3 illustrated in FIG. 3 is attached to a time t in FIG. 4.

The captured images (a) and (b) illustrated in FIG. 3 are the time (t0-2Δt) and the time (t0-Δt) in FIG. 4, that is, the captured images when the sample tube rack 2 is moving while decelerating. The sample tube 3 and the sample 4 in the sample tube 3 continue to move.

The captured image (c) is a captured image at the time t0 in FIG. 4, that is, when the sample tube rack 2 stops the transfer. At the time t0, the sample tube rack 2 stops the transfer, but the liquid surface 41 of the sample 4, which is a free surface, swings as shown in the captured image (c) due to the inertial force acting on the sample 4 inside the sample tube 3. The sample tube 3 also swings due to the support rigidity and the inertial force by the sample tube rack 2.

The captured images (d) to (f) are captured images from the time (t0+Δt) to the time (t0+3Δt) in FIG. 4, that is, when the sample tube rack 2 is completely stopped. At these times, the sample tube 3 is substantially stationary, but the liquid surface 41 of the sample 4 continues to swing as shown in the captured images (d) to (f).

The captured images (g) to (i) are captured images from time (t0+4Δt) to time (t0+6Δt) in FIG. 4 (however, the time (t0+5Δt) and the time (t0+6Δt) are not illustrated in FIG. 4). At these times, a further time has elapsed from the time when the captured image (f) is captured, the sample tube 3 is stationary, and the liquid surface 41 of the sample 4 is reduced in size due to attenuation of swinging and is substantially not moving.

In the present embodiment, the control unit 10 detects the position of the liquid surface 41 using the three captured images (d), (e), and (f) illustrated in FIG. 3. That is, the control unit 10 detects the position of the liquid surface 41 using the three captured images captured during a period from the time when Δt has elapsed from the time t0 when the sample tube rack 2 is stopped to the time when 3Δt has elapsed from the time t0.

A specific detection method of the position of the liquid surface 41 will be described.

The control unit 10 creates two difference images of captured images at two consecutive times from the three captured images. In the present embodiment, the control unit 10 creates a difference image A between the captured image (d) and the captured image (e) and a difference image B between the captured image (e) and the captured image (f) from the three captured images (d), (e), and (f). A set of image capturing times of the captured images from which the difference image A is obtained and a set of image capturing times of the captured images from which the difference image B is obtained are different from each other.

The control unit 10 detects, as the position of the liquid surface 41 of the sample 4, a region having the largest area among regions having a temporal change in the difference image. In the present embodiment, the control unit 10 specifically detects the position of the liquid surface 41 as follows.

The control unit 10 creates an image (hereinafter, it is referred to as an "inter-image difference image") obtained by performing binarization processing on the logical product image of the two difference images. In the present embodiment, the control unit 10 obtains a logical product image of the difference image A and the difference image B, and performs binarization processing on the logical product image to create an inter-image difference image. By performing binarization processing on the logical product image of the two difference images, the control unit 10 represents a region having a small difference between the two difference images (that is, a region having a small temporal change) in black, and represents a region having a large difference between the two difference images (that is, a region having a large temporal change) in white. The region where the difference between the two difference images is large is a region where the difference in pixel luminance (that is, temporal change in luminance) between the two difference images is larger than a predetermined threshold. The predetermined threshold can be arbitrarily determined in advance.

Therefore, in the inter-image difference image, in the three captured images, a region with a small temporal change is displayed in black, and a region with a large temporal change is displayed in white. Hereinafter, a region having a large temporal change (that is, a region displayed in white) in the inter-image difference image is referred to as a "change region". A plurality of change regions may be present in the inter-image difference image.

The control unit 10 detects a change region having the largest area in the created inter-image difference image as the position of the liquid surface 41 of the sample 4. Since the change region is a region having a large difference between the difference images, that is, a region having a large temporal change, the change region represents a region moving in the captured image. The change region of the inter-image difference image obtained from the captured images (d), (e), and (f) is the liquid surface 41 of the sample 4. The control unit 10 can more reliably and accurately detect a region having a large temporal change, that is, the liquid surface 41 of the sample 4 by performing the binarization processing to create the inter-image difference image.

The main points of the liquid surface detection method according to the present embodiment are (1) creating a state in which only the liquid surface 41 of the sample 4 is moving while the sample tube rack 2 is stopped and the sample tube 3 is substantially stationary (the states of captured image (d) to (f) of FIG. 3), and (2) creating a difference image of the captured images using a plurality of captured images captured during the state of (1).

In order to attain (1), the control unit 10 stops the sample tube rack 2 being transferred through the rack conveyance path 141. Next, after at least the time interval Δt elapses after the sample tube rack 2 is stopped, the camera 5 starts capturing an image of the sample tube 3. This is because there is a high possibility that the sample tube 3 is not stationary due to the support rigidity of the sample tube rack 2 until the time interval Δt elapses after the sample tube rack 2 stops. In order to attain (2), the camera 5 captures an image of the sample tube 3 a plurality of times before the liquid surface 41 of the sample 4 is stopped due to the attenuation of the swinging.

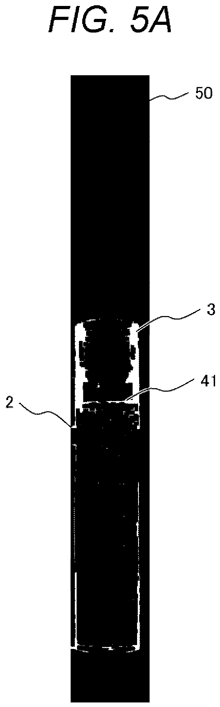

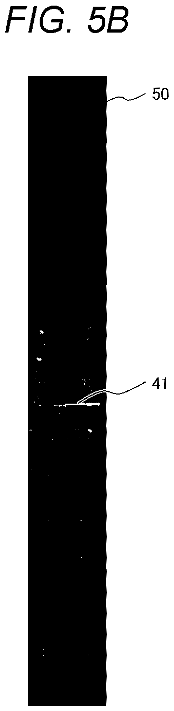

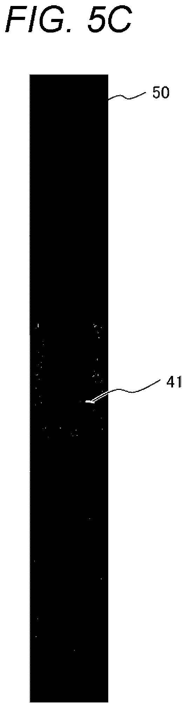

The effect of the liquid surface detection method according to the present embodiment will be described with reference to FIGS. 5A, 5B, and 5C.

FIGS. 5A, 5B, and 5C are schematic diagrams illustrating examples of the inter-image difference image 50. These inter-image difference images 50 are created by creating two difference images using three captured images captured at consecutive times illustrated in FIG. 3 and performing binarization processing on a logical product image of the two difference images. FIG. 5A is an example of the inter-image difference image 50 created using the three captured images of the captured image (a) to the captured image (c) in FIG. 3. FIG. 5B is an example of the inter-image difference image 50 created using the three captured images of the captured image (d) to the captured image (f) in FIG. 3. FIG. 5C is an example of the inter-image difference image 50 created using the three captured images of the captured image (g) to the captured image (i) in FIG. 3.

As described above, in the inter-image difference image 50, a region having a large temporal change (that is, the moving region) in the three captured images is a change region displayed in white, and a region having a small temporal change (that is, the stationary region) in the three captured images is displayed in black.

In the inter-image difference image 50 of FIG. 5A, not only the liquid surface 41 of the sample 4 but also the sample tube 3 and the sample tube rack 2 are moving, and thus, regions where the sample tube 3 and the sample tube rack 2 are present are also displayed in white as change regions in addition to the liquid surface 41. Therefore, in order to detect the liquid surface 41 from the inter-image difference image 50 in FIG. 5A, it is necessary to determine an unnecessary region other than the region indicating the liquid surface 41 from the change regions and to delete the unnecessary region.

In the inter-image difference image 50 of FIG. 5C, since the sample tube rack 2 and the sample tube 3 are stationary and the liquid surface 41 of the sample 4 swings, only the region where the liquid surface 41 is mainly present is displayed in white as a change region. However, in the inter-image difference image 50 in FIG. 5C, since the swinging of the liquid surface 41 is small and the change region is minute, there is a possibility that a change region obtained as noise is also erroneously detected as the liquid surface 41, or a region where the liquid surface 41 is present cannot be distinguished from a region other than the liquid surface 41. Therefore, it is difficult to reliably and accurately detect the liquid surface 41 from the inter-image difference image 50 in FIG. 5C.

In the inter-image difference image 50 of FIG. 5B, since the sample tube rack 2 and the sample tube 3 are stationary and the liquid surface 41 of the sample 4 continues to swing relatively largely, the region where the liquid surface 41 is present, which is a region where the temporal change is large, is clearly detected as a change region represented in white. Note that, in the inter-image difference image 50 in FIG. 5B, there is a region (change region) represented in white due to noise or the like in addition to the liquid surface 41. Therefore, the control unit 10 extracts the change region having the largest area in the inter-image difference image 50 as the position of the liquid surface 41 of the sample 4.

Note that the control unit 10 detects the position of the liquid surface 41 from the three captured images in the above description, but may detect the position of the liquid surface 41 from two or four or more captured images by using a difference image of two or four or more captured images.

The position of the liquid surface 41 detected by the control unit 10 can be displayed together with the captured image of the sample tube 3 on a display device included in the automated analysis device 1 or a display device connected to the automated analysis device 1.

As described above, in the automated analysis device and the liquid surface detection method according to the present embodiment, the transfer of the sample tube rack 2 is stopped, the sample tube 3 is imaged a plurality of times to obtain a captured image while the liquid surface 41 of the sample 4 continues to swing while the transfer of the sample tube rack 2 is stopped, and the position of the liquid surface 41 of the sample 4 is detected based on a region having a temporal change among these captured images. Therefore, the automated analysis device and the liquid surface detection method according to the present embodiment can reliably and accurately detect the position of the liquid surface 41 of the sample 4 regardless of the saturation and permeability of the sample 4.

Furthermore, in the present embodiment, the illumination 6 is installed on the same side as the camera 5 with respect to the rack conveyance path 141, and the illumination 6 can irradiate the sample tube 3 that is a subject of the camera 5 with light. For this reason, when the liquid surface 41 of the sample 4 swings, the light reflected by the liquid surface 41 is shimmered, and the control unit 10 can detect this shimmering as a change region (region having a large temporal change) of the captured image. Therefore, in the automated analysis device and the liquid surface detection method according to the present embodiment, when the illumination 6 is used, the position of the liquid surface 41 of the sample 4 can be more reliably and accurately detected even when the saturation of the sample 4 is low and the permeability is high.

### Second Embodiment

An automated analysis device 1 according to a second embodiment of the present invention will be described. The automated analysis device 1 according to the present embodiment detects the liquid surface 41 of the sample 4 by the liquid surface detection method described in the first embodiment. The automated analysis device 1 according to the present embodiment is different from the automated analysis device 1 according to the first embodiment in that the sample supply unit 12 includes the camera 5 and the illumination 6. Hereinafter, differences of the automated analysis device 1 according to the present embodiment from the automated analysis device 1 according to the first embodiment will be mainly described.

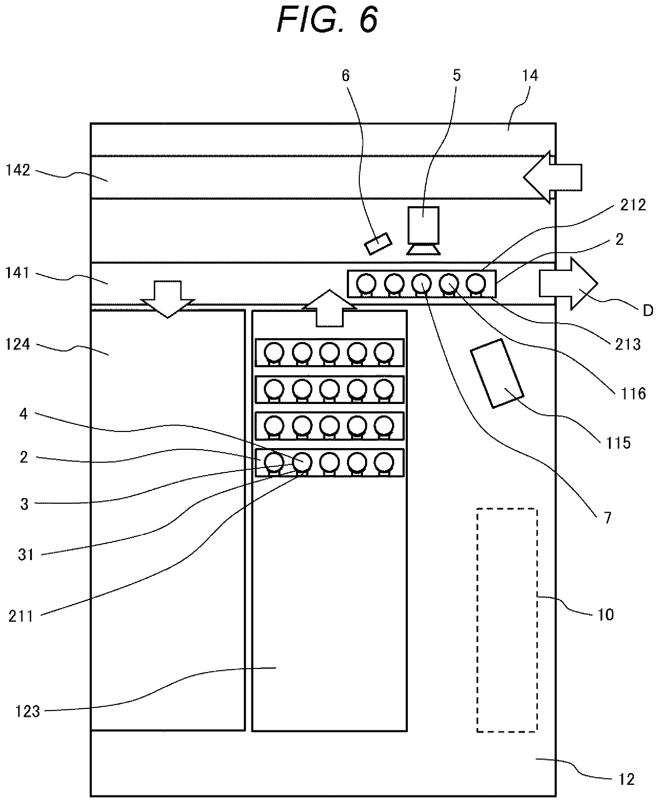

FIG. 6 is a top view illustrating an outline of a configuration of a sample supply unit 12 included in the automated analysis device 1 according to the present embodiment.

The sample supply unit 12 includes the camera 5 and the illumination 6 on the side of the rack conveyance path 141 for loading. The camera 5 and the illumination 6 are installed on the same side with respect to the rack conveyance path 141. The camera 5 and the illumination 6 are installed on the opposite side of the barcode reader 115 with respect to the rack conveyance path 141, that is, at positions where the rack conveyance path 141 is sandwiched between the camera 5 and the illumination 6 and the barcode reader 115.

The sample tube 3 housed in the sample tube rack 2 houses the sample 4. The sample tube 3 includes a barcode label 31 for sample identification. In the present embodiment, it is assumed that the barcode label 31 is attached to the sample tube 3. The barcode label 31 is attached to a part of the sample tube 3 in the circumferential direction.

The sample tube rack 2 placed on the rack conveyance path 141 for loading of the conveyance unit 14 has one surface (back surface 213) facing the barcode reader 115 and the other surface (front surface 212) facing the camera 5 and the illumination 6.

Since the barcode label 31 is attached to a part of the sample tube 3 in the circumferential direction, the camera 5 can image the sample 4 accommodated in the sample tube 3 from the front surface 212 of the sample tube rack 2.

The barcode reader 115 reads the barcode label 31 of the sample tube 3 for the sample tube rack 2 transferred to the barcode reading position 116 by the rack conveyance path 141.

A slit 211 is provided on the back surface 213 of the sample tube rack 2 so that the barcode reader 115 can read the barcode label 31 of the sample tube 3 without taking out the sample tube 3 from the sample tube rack 2. The orientation of the barcode label 31 of the sample tube 3 is aligned so as to face the back surface 213 of the sample tube rack 2.

The sample supply unit 12 is controlled by the control unit 10 to move the sample tube racks 2 installed in the carry-in port 123 for the sample tube rack 2 to the rack conveyance path 141 one by one. The control unit 10 transfers the sample tube rack 2 moved to the rack conveyance path 141 to each of the focus position 7 and the barcode reading position 116 of the camera 5.

At the focus position 7 of the camera 5, the front surface 212 of the sample tube rack 2 is an image capturing surface of the camera 5. The camera 5 captures an image of the sample tube 3 and the sample 4 accommodated in the sample tube 3 at the focus position 7. Since the barcode label 31 is attached to a part of the sample tube 3 in the circumferential direction, the control unit 10 can detect the position of the liquid surface 41 of the sample 4 from the captured image obtained by capturing an image of the sample tube 3 by the camera 5 without being obstructed by the barcode label 31.

At the barcode reading position 116, the back surface 213 of the sample tube rack 2 serves as a scan surface of the barcode reader 115. The barcode reader 115 reads the barcode label 31 attached to the sample tube 3 at the barcode reading position 116. The control unit 10 can identify the sample 4 contained in the sample tube 3 based on the information obtained from the barcode label 31 read by the barcode reader 115. After the identification of the sample 4, the sample supply unit 12 is controlled by the control unit 10, allocates the analysis module 13 as a transfer destination to the sample tube rack 2 according to the item information registered in advance, and transfers the sample tube rack 2 to the rack conveyance path 141 for loading of the conveyance unit 14.

In the automated analysis device 1 according to the present embodiment, the barcode reader 115 is installed on one side of the rack conveyance path 141 for loading, and the camera 5 is installed on the other side of the rack conveyance path 141. Therefore, the control unit 10 can perform image capturing of the sample tube 3 stored in the sample tube rack 2 on the rack conveyance path 141 and reading of the barcode label 31 attached to the sample tube 3 without changing the orientation of the sample tube 3. In the present embodiment, since the reading of the barcode label 31 and the image capturing of the sample tube 3 can be performed without changing the orientation of the sample tube 3, it is possible to prevent a decrease in the throughput of the automated analysis device 1, and a mechanism for changing the orientation of the sample tube 3 is unnecessary.

Furthermore, in the present embodiment, the focus position 7 of the camera 5 and the barcode reading position 116 may be, and the image capturing operation of the sample tube 3 and the reading operation of the barcode label 31 may be performed at one place. In this way, since both the image capturing of the sample tube 3 and the reading of the barcode label 31 can be performed at one position where the sample tube rack 2 is stopped, the number of times of stopping the sample tube rack 2 can be halved, and a decrease in the throughput of the automated analysis device 1 can be prevented.

Note that the present invention is not limited to the above embodiments, and various modifications are possible. For example, the above-described embodiments have been described in detail in order to describe the present invention in an easy-to-understand manner, and the present invention is not necessarily limited to an aspect including all the described configurations. Further, a part of the configuration of one embodiment can be replaced with the configuration of another embodiment. In addition, the configuration of another embodiment can be added to the configuration of a certain embodiment. In addition, a part of the configuration of each embodiment can be deleted, or another configuration can be added or replaced.

### Reference Signs List

- 1: automated analysis device
- 2: sample tube rack
- 2a: sample tube rack with multi-channel
- 2b: sample tube rack with single-channel
- 3: sample tube
- 4: sample
- 5: camera
- 6: illumination
- 7: focus position
- 10: control unit
- 12: sample supply unit
- 13: analysis module
- 14: conveyance unit
- 31: barcode label
- 41: liquid surface
- 50: inter-image difference image
- 115: barcode reader
- 116: barcode reading position
- 123: carry-in port
- 124: carry-out port
- 126: barcode reading position
- 141: rack conveyance path for loading
- 142: rack conveyance path for unloading
- 211: slit
- 212: front surface of sample tube rack
- 213: back surface of sample tube rack
- C: central axis of sample tube
- D: arrow representing transfer direction of sample tube rack
- p: pitch
- t: time
- t0: time when sample tube rack stops
- Δt: time interval of image capturing
- V: transfer speed

## Claims

1. An automated analysis device comprising:
a rack conveyance path that transfers a sample tube rack storing a sample tube containing a sample;
a camera provided on a side of the rack conveyance path; and
a control unit that controls the rack conveyance path and the camera,
wherein the control unit is configured to:
stop transfer of the sample tube rack transferred by the rack conveyance path;
acquire a plurality of captured images of the sample tube by capturing an image of the sample tube stored in the sample tube rack in which transfer is stopped a plurality of times with the camera;
create a difference image of a plurality of the captured images; and
set a region having a largest area among regions having a temporal change in the difference image as a position of a liquid surface of the sample.

2. The automated analysis device according to claim 1, wherein the control unit creates a plurality of the difference images, obtains a logical product image of the plurality of difference images, and sets a region having a largest area among regions having a temporal change in the logical product image as a position of the liquid surface of the sample.

3. The automated analysis device according to claim 2, wherein the control unit performs binarization processing on the logical product image, and sets a region having a largest area among regions having a temporal change in an image created by performing the binarization processing as a position of the liquid surface of the sample.

4. The automated analysis device according to claim 1, further comprising an illumination installed on a side of the rack conveyance path on the same side as the camera with respect to the rack conveyance path,
wherein the illumination irradiates the sample tube with light.

5. The automated analysis device according to claim 1, further comprising a barcode reader that reads a barcode label included in the sample tube,
wherein the barcode reader is installed on a side opposite to the camera with respect to the rack conveyance path.

6. A liquid surface detection method, comprising:
a step of transferring a sample tube rack storing a sample tube containing a sample by a rack conveyance path;
a step of stopping transfer of the sample tube rack transferred by the rack conveyance path;
a step of acquiring a plurality of captured images of the sample tube by capturing an image of the sample tube stored in the sample tube rack in which the transfer is stopped a plurality of times with a camera;
a step of creating a difference image of a plurality of the captured images; and
a step of setting a region having a largest area among regions having a temporal change in the difference image as a position of a liquid surface of the sample.
